# FASCICULE DE BREVET EUROPEEN

(11) **EP 2 720 908 B1**
(45) Date de publication et mention de la délivrance du brevet: **13.03.2019**
(21) Numéro de dépôt: 12731075.3
(22) Date de dépôt: 25.05.2012
(51) Int. Cl.: B60R 16/03

(54) **PROCEDE ET SYSTEME DE COMMANDE DE GESTION DE L'ALIMENTATION ELECTRIQUE D'UN VEHICULE APRES ARRET DU GROUPE MOTOPROPULSEUR**
STEUEREINHEIT UND -VERFAHREN ZUR STEUERUNG DES STROMS IN EIN KRAFTFAHRZEUG NACH MOTORABSCHALTUNG
CONTROL METHOD AND SYSTEM FOR CONTROLLING ELECTRIC POWER OF A VEHICLE AFTER SHUT DOWN

(30) Priorité: 15.06.2011 FR 1155220
(43) Date de publication de la demande: 23.04.2014
(73) Titulaire: Renault S.A.S., 92100 Boulogne-Billancourt (FR)
(72) Inventeur: POISSON-CHOISNE, Carine, F-91310 Montlhery (FR); BERTRAND, Gregory, F-92600 Asnieres (FR)
(86) Numéro de dépôt international: PCT/FR2012/051189
(87) Numéro de publication internationale: WO 2012/172230

(56) Documents cités:
- EP-A2- 0 396 090
- WO-A1-2007/083085
- WO-A1-2008/136738
- US-A- 5 481 456
- US-A1- 2002 091 475
- US-A1- 2004 019 414
- US-A1- 2010 082 198
- US-A1- 2010 109 430

## Description

L'invention a pour domaine technique la gestion de l'alimentation électrique d'un véhicule, et plus particulièrement, la gestion de l'alimentation électrique d'un véhicule après l'arrêt du moteur.

Un procédé et système de commande de l'alimentation électrique d'actionneurs d'un véhicule automobile est par exemple décrit dans le WO 2007/083085. Dans la plupart des véhicules, l'arrêt du moteur suivi du retrait de la clef de contact signale le début d'une phase de maintien de l'alimentation du calculateur d'injection. Ce calculateur gère la phase d'endormissement du véhicule au cours de laquelle sont réalisé des vérifications et des diagnostics préalables à l'extinction totale du véhicule. Par exemple, si la température du circuit de refroidissement du moteur est au dessus d'un seuil, les ventilateurs sont maintenus actifs pour permettre le refroidissement du groupe motopropulseur. Le fonctionnement des ventilateurs est alors assujetti à la surveillance de la température du circuit de refroidissement réalisée par le calculateur d'injection. Ce dernier doit donc rester alimenté pour continuer la mesure.

La phase de maintien de l'alimentation du réseau est accompagnée d'une consommation d'énergie débitée sur la batterie sans possibilité de la recharger grâce à l'alternateur, le moteur étant arrêté. Au bout d'un certain temps, les calculateurs sont coupés. Le calculateur maître doit attendre que tous les calculateurs esclaves soient éteints pour éteindre définitivement le véhicule.

Un tel fonctionnement de la gestion de l'alimentation d'un véhicule pose problème lorsque de nouvelles fonctions nécessitent un maintien plus long de l'alimentation de certains calculateurs. Par exemple, la surveillance de l'étanchéité du réservoir de carburant nécessite un maintien en fonctionnent d'environ deux heures, soit 4% de la charge d'une batterie pour véhicule automobile.

L'utilisation de l'architecture actuelle peut créer un affaiblissement de la batterie préjudiciable au démarrage et au fonctionnement du véhicule.

Il existe donc un besoin pour une nouvelle gestion du maintien d'alimentation permettant de réduire la quantité d'énergie consommée.

Selon un aspect de l'invention, on définit un procédé de commande de l'alimentation électrique d'un véhicule automobile comprenant un groupe motopropulseur et une batterie d'alimentation électrique, le véhicule étant muni d'au moins un calculateur autonome, d'au moins un calculateur maître et d'au moins un calculateur esclave, les calculateurs étant reliés par un réseau de données, les calculateurs autonomes étant aptes à réaliser chacun au moins une tâche après l'arrêt du groupe motopropulseur et maintien de l'alimentation des calculateurs précités pendant une première durée. Le procédé de commande comprend les étapes successives suivantes :
- on déclare l'absence du calculateur autonome au calculateur maître,
- on interrompt l'alimentation de chaque calculateur esclave,
- on interrompt l'alimentation du calculateur maître,
- on commande chaque calculateur autonome de sorte qu'il maintienne son alimentation au delà de la première durée,
- on commande chaque calculateur autonome de sorte qu'il interrompe son alimentation lorsqu'il a terminé sa tâche.

Le procédé de commande a pour avantage de laisser éveillé uniquement le ou les calculateurs qui effectuent une surveillance sans interaction avec les autres calculateurs. La consommation d'énergie est ainsi réduite et il n'est pas nécessaire de recourir à un surdimensionnement de la batterie.

Un autre avantage du procédé de commande est de ne pas nécessiter de modification de l'architecture existante dans la plupart des véhicules.

On peut déclarer l'absence du calculateur autonome en interrompant l'émission de données par le calculateur autonome à destination du calculateur maître par l'intermédiaire du réseau de données.

On peut déclarer l'absence du calculateur autonome en émettant un paquet de données prédéfini depuis le calculateur autonome à destination du calculateur maître par l'intermédiaire du réseau de données.

Selon un autre aspect de l'invention, on définit un système de commande de l'alimentation électrique d'un véhicule automobile comprenant un groupe motopropulseur et une batterie d'alimentation électrique muni d'au moins un calculateur autonome, d'au moins un calculateur maître et d'au moins un calculateur esclave, les calculateurs étant reliés par un réseau de données, les calculateur autonomes étant aptes à réaliser chacun au moins une tâche après l'arrêt du groupe motopropulseur, le véhicule étant par ailleurs muni d'un réseau d'alimentation électrique reliant les calculateurs à la batterie d'alimentation électrique, caractérisé par le fait que,
chaque calculateur maître et chaque calculateur autonome étant apte à superviser sa propre connexion au réseau électrique,
les calculateurs sont aptes à maintenir leur alimentation électrique pendant une première durée après l'arrêt du groupe motopropulseur,
chaque calculateur autonome est apte à réaliser une tâche après arrêt du groupe motopropulseur,
chaque calculateur autonome étant en outre apte à demeurer connecté au réseau électrique à l'expiration de la première durée et à interrompre sa propre connexion électrique après réalisation de sa tâche.

Un calculateur autonome peut être apte à signaler son absence à un calculateur maître.

Un calculateur autonome peut être apte à interrompre son émission de données à destination d'un calculateur maître par l'intermédiaire du réseau de données, afin de déclarer son absence au calculateur maître.

Un calculateur autonome peut être apte à émettre un paquet de données prédéfini à destination d'un calculateur maître par l'intermédiaire du réseau de données, afin de déclarer son absence au calculateur maître.

Le réseau de données peut être un réseau CAN. Par réseau CAN, on entend un contrôleur de réseau de zone (« Controller Area Network » en langue anglaise, acronyme CAN) qui permet le raccordement à un même câble, ou bus, d'un grand nombre de calculateurs qui communiquent à tour de rôle).

D'autres buts, caractéristiques et avantages apparaîtront à la lecture de la description suivante donnée uniquement en tant qu'exemple non limitatif et faite en référence aux dessins annexés sur lesquels :
- la figure 1 illustre les principaux éléments d'un système d'échanges de données d'un véhicule automobile, et
- la figure 2 illustre les principales étapes d'un procédé de gestion de l'alimentation.

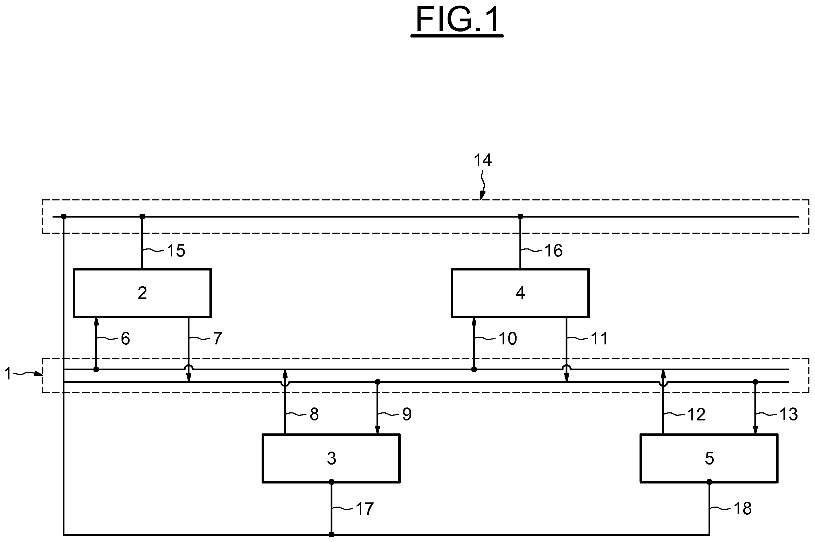

La figure 1 illustre un système de commande de l'alimentation électrique d'un véhicule automobile après arrêt du groupe motopropulseur. Le véhicule décrit ci-après est un véhicule à moteur thermique utilisant un carburant liquide ou gazeux. Toutefois, le système de commande s'applique également à un véhicule électrique mu par une machine électrique alimentée par des batteries. On peut voir un réseau d'échange de données entre différents calculateurs. Le réseau comprend un bus de données de type CAN référencé 1, reliant un calculateur d'injection 2, un calculateur d'habitacle 3, un premier calculateur 4, et un deuxième calculateur 5.

La figure 1 illustre un exemple comprenant deux calculateurs distincts du calculateur d'injection 2 et du calculateur d'habitacle 3. Toutefois la prise en compte d'autres calculateurs constitue une simple extension du réseau illustré par la figure 1.

Le bus CAN 1 est un réseau bidirectionnel pouvant échanger et transmettre des données avec chacun des calculateurs qui lui sont connectés par l'intermédiaire de connexions entrantes (6,8,10,12) et sortantes (7,9,11,13).

Par ailleurs, chaque calculateur est relié à un réseau d'alimentation électrique 14 par au moins une connexion (15,16,17,18).

Par calculateur, on entend tout moyen de détermination, d'estimation ou de commande, passif ou actif.

Le système de commande de l'alimentation après arrêt du groupe motopropulseur est réparti entre le calculateur d'habitacle et le calculateur d'injection.

Le calculateur d'habitacle gère les fonctions relatives à l'habitacle, directement ou par l'intermédiaire de calculateurs esclaves. Le calculateur d'habitacle est dit calculateur maître car il conditionne l'activité du réseau tant qu'il est alimenté. Il coupe son alimentation en dernier. Un exemple de calculateur esclave est le calculateur de commande des vitres électriques, ou de l'air climatisé. Lors de l'extinction du véhicule, le calculateur d'habitacle scrute l'arrêt d'activité des calculateurs esclaves qui ont coupé leur alimentation puis interrompt sa propre alimentation.

Le calculateur d'injection est dit calculateur autonome car il contrôle sa propre alimentation électrique sans se montrer actif vis-à-vis du réseau CAN, le calculateur maître le croyant donc absent. Il est indépendant du calculateur d'habitacle. Le calculateur d'injection a pour fonction ou tâche principale de commander l'injection de carburant. Il surveille également la température du circuit de refroidissement et commande les ventilateurs. Après extinction du groupe motopropulseur, le calculateur d'injection peut réaliser des tâches de surveillance et de maintenance, par exemple de surveillance de l'étanchéité du réservoir de carburant. Dans le cas d'un véhicule hybride, il peut s'agir de la surveillance de l'étanchéité du réservoir d'hydrogène ou de la pile à combustible Dans un véhicule électrique, il peut s'agir de la surveillance de l'intégrité ou de la température des batteries.

Le calculateur d'injection communique avec le calculateur d'habitacle par l'intermédiaire du bus CAN. Après arrêt du groupe motopropulseur et retrait de la clé de contact, le calculateur d'injection déclare son absence au calculateur d'habitacle. Son absence peut être déclarée par l'émission d'un paquet de données ou (trame) prédéfini. L'absence peut également être déclarée par l'interruption de l'émission de données sur le réseau. Le calculateur d'habitacle ne recevant plus de données, en conclut que le calculateur d'injection a terminé ses tâches ou fonctions.

Le calculateur d'habitacle surveille alors l'activité des calculateurs esclaves auxquels il est connecté, puis interrompt sa propre alimentation si les esclaves ont interrompu leur émission de données.

Contrairement à la conclusion du calculateur d'habitacle, le calculateur d'injection est toujours alimenté, et poursuit ses tâches et fonctions. Dès que ses tâches sont terminées, il interrompt lui-même son alimentation électrique.

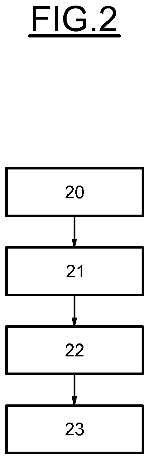

La figure 2 illustre les stades d'alimentation par lesquels passent les différents calculateurs. Le procédé de commande de gestion de l'alimentation après arrêt du groupe motopropulseur est illustré par le maintien en alimentation du calculateur d'injection afin de réaliser la surveillance d'étanchéité du réservoir par le calculateur d'injection. Une telle tâche ou fonction peut être maintenue pendant une période de temps importante grâce à une consommation électrique réduite aux systèmes strictement nécessaires. Cet exemple peut être appliqué à toute autre fonction réalisée par un ou plusieurs calculateurs.

Lors d'une première étape 20, l'alimentation des calculateurs (2,3,4,5) est maintenue après l'extinction du véhicule.

Lors d'une deuxième étape 21, le calculateur d'injection 2 cesse d'émettre des données sur le bus CAN 1. Il est alors considéré comme étant absent par les autres calculateurs (3,4,5).

Lors d'une troisième étape 22, l'alimentation des autres calculateurs (4,5) et du calculateur d'habitacle 3 est interrompue. A l'issue de la troisième étape, le calculateur d'injection 2 maintient son alimentation, tandis que le calculateur d'habitacle 3 et les autres calculateurs (4,5) sont éteints.

La consommation électrique est ainsi réduite, tandis que le calculateur d'injection 2 peut poursuivre ses fonctions de surveillance et de maintenance.

Lors d'une quatrième étape 23, le calculateur d'injection 2 a terminé ses fonctions de surveillance et de maintenance, et interrompt sa propre alimentation. Le véhicule est alors totalement éteint.

Ainsi, le calculateur d'habitacle 3 connaît l'alimentation électrique d'autres calculateurs 4,5 qui en sont esclaves. Le calculateur d'habitacle 3 est un calculateur autonome.

Il apparaît par ailleurs que le calculateur d'injection 2 gère son alimentation et son fonctionnement d'une façon autonome par rapport au calculateur d'habitacle 3. Le calculateur d'injection 2 est un calculateur autonome.

En d'autres termes, le procédé de commande d'un véhicule comprenant un calculateur autonome, un calculateur maître et des calculateurs esclaves permet de maintenir l'alimentation électrique du calculateur autonome en déclarant son absence au calculateur maître. L'absence peut être déclarée activement par l'envoi d'un paquet de données particulier, ou passivement par l'interruption des communications avec le calculateur maître. Le calculateur maître interrompt alors sa propre alimentation une fois que l'alimentation des calculateurs esclaves a été coupée.

Le calculateur autonome est alors toujours alimenté et peut continuer ses fonctions, par exemple des fonctions de surveillance et de maintenance.

Lorsque le calculateur autonome a terminé ses fonctions, il interrompt sa propre alimentation. Le véhicule est alors éteint.

Le procédé et le système de commande permettent d'accompagner le véhicule avant son extinction totale une fois que tous les échanges avec les calculateurs ont été effectués.

L'intérêt du procédé et du système de commande réside dans le fait de se focaliser sur la transition d'une demande de maintien de l'alimentation d'un calculateur justifiant son utilité à communiquer avec les autres calculateurs, à une demande de maintien de l'alimentation d'un calculateur ne nécessitant plus d'interagir avec d'autres calculateurs.

Le système et le procédé de commande détectent ainsi l'état d'autonomie d'un calculateur et ajustent en conséquence l'alimentation des différents calculateurs.

## Revendications

1. Procédé de commande de l'alimentation électrique d'un véhicule automobile comprenant un groupe motopropulseur et une batterie d'alimentation électrique, le véhicule étant muni d'au moins un calculateur autonome (2), d'au moins un calculateur maître (3) et d'au moins un calculateur esclave (4), les calculateurs (2,3,4) étant reliés par un réseau de données (1), les calculateurs autonomes (2) étant aptes à réaliser chacun au moins une tâche après l'arrêt du groupe motopropulseur et maintien de l'alimentation des calculateurs précités (2,3,4) pendant une première durée,
le procédé de commande étant **caractérisé par le fait qu'**il comprend les étapes successives suivantes :
- on déclare l'absence du calculateur autonome (2) au calculateur maître (3),
- on interrompt l'alimentation de chaque calculateur esclave (4),
- on interrompt l'alimentation du calculateur maître (3),
- on commande chaque calculateur autonome (2) de sorte qu'il maintienne son alimentation au-delà de la première durée,
- on commande chaque calculateur autonome (2) de sorte qu'il interrompe son alimentation lorsqu'il a terminé sa tâche.

2. Procédé selon la revendication 1, dans lequel on déclare l'absence du calculateur autonome (2) en interrompant l'émission de données par le calculateur autonome (2) à destination du calculateur maître (3) par l'intermédiaire du réseau de données (1).

3. Procédé selon la revendication 1, dans lequel on déclare l'absence du calculateur autonome en émettant un paquet de données prédéfini depuis le calculateur autonome (2) à destination du calculateur maître (3) par l'intermédiaire du réseau de données (1).

4. Système de commande de l'alimentation électrique d'un véhicule automobile comprenant un groupe motopropulseur et une batterie d'alimentation électrique muni d'au moins un calculateur autonome (2), d'au moins un calculateur maître (3) et d'au moins un calculateur esclave (4), les calculateurs (2,3,4) étant reliés par un réseau de données (1), les calculateur autonomes (2) étant aptes à réaliser chacun au moins une tâche après l'arrêt du groupe motopropulseur, le véhicule étant par ailleurs muni d'un réseau d'alimentation électrique reliant les calculateurs à la batterie d'alimentation électrique, **caractérisé par le fait que**,
chaque calculateur maître (3) et chaque calculateur autonome (2) étant apte à superviser sa propre connexion au réseau électrique,
les calculateurs (2,3,4) sont aptes à maintenir leur alimentation électrique pendant une première durée après l'arrêt du groupe motopropulseur,
chaque calculateur autonome (2) est apte à réaliser une tâche après arrêt du groupe motopropulseur,
chaque calculateur autonome (2) étant en outre apte à demeurer connecté au réseau électrique à l'expiration de la première durée et à interrompre sa propre connexion électrique après réalisation de sa tâche.

5. Système de commande selon la revendication 4, dans lequel un calculateur autonome (2) est apte à signaler son absence à un calculateur maître (3).

6. Système selon la revendication 5, dans lequel un calculateur autonome (2) est apte à interrompre son émission de données à destination d'un calculateur maître (3) par l'intermédiaire du réseau de données (1), afin de déclarer son absence au calculateur maître (3).

7. Système selon la revendication 5, dans lequel un calculateur autonome (2) est apte à émettre un paquet de données prédéfini à destination d'un calculateur maître (3) par l'intermédiaire du réseau de données (1), afin de déclarer son absence au calculateur maître (3).

8. Système selon l'une quelconque des revendications 4 à 7, dans lequel le réseau de données (1) est un réseau CAN.

## Patentansprüche

1. Steuerverfahren der Stromversorgung eines Fahrzeugs, umfassend ein Antriebssystem und eine Stromversorgungsbatterie, wobei das Fahrzeug mit wenigstens einem autonomen Steuergerät (2), wenigstens einem Master-Steuergerät (3) und wenigstens einem Slave-Steuergerät (4) ausgestattet ist, wobei die Steuergeräte (2, 3 4) durch ein Datennetzwerk (1) verbunden sind und die autonomen Steuergeräte (2) zum Ausführen jeweils wenigstens einer Aufgabe nach dem Abstellen des Antriebssystems und Aufrechterhalten der Versorgung der Steuergeräte (2, 3, 4) für eine erste Dauer ausgebildet sind,
wobei das Steuerverfahren **dadurch gekennzeichnet ist, dass** es die folgenden aufeinander folgenden Schritte umfasst:
- Das Fehlen des autonomen Steuergeräts (2) wird an das Master-Steuergerät (3) gemeldet.
- Die Versorgung von jedem Slave-Steuergerät (4) wird unterbrochen.
- Die Versorgung des Master-Steuergeräts (3) wird unterbrochen.
- Jedes autonome Steuergerät (2) wird so gesteuert, dass es seine Versorgung über die erste Dauer hinaus aufrechterhält.
- Jedes autonome Steuergerät (2) wird so gesteuert, dass es seine Versorgung unterbricht, bis es seine Aufgabe abgeschlossen hat.

2. Verfahren nach Anspruch 1, wobei das Fehlen des autonomen Steuergeräts (2) durch Unterbrechen des Sendens von Daten durch das autonome Steuergerät (2) an das Master-Steuergerät (3) über das Datennetzwerk (1) gemeldet wird.

3. Verfahren nach Anspruch 1, wobei das Fehlen des autonomen Steuergeräts durch Senden eines vordefinierten Datenpakets vom autonomen Steuergerät (2) an das Master-Steuergerät (3) über das Datennetzwerk (1) gemeldet wird.

4. Steuersystem der Stromversorgung eines Fahrzeugs, umfassend ein Antriebssystem und eine Stromversorgungsbatterie, ausgestattet mit wenigstens einem autonomen Steuergerät (2), wenigstens einem Master-Steuergerät (3) und wenigstens einem Slave-Steuergerät (4), wobei die Steuergeräte (2, 3, 4) durch ein Datennetzwerk (1) verbunden sind, die autonomen Steuergeräte (2) zum Ausführen jeweils wenigstens einer Aufgabe nach dem Abstellen des Antriebssystems ausgebildet sind und das Fahrzeug ferner mit einem die Steuergeräte mit der Stromversorgungsbatterie verbindenden Stromversorgungsnetz ausgestattet ist, **dadurch gekennzeichnet, dass**
jedes Master-Steuergerät (3) und jedes autonome Steuergerät (2) zum Überwachen seiner eigenen Verbindung mit dem Stromnetz ausgebildet ist,
die Steuergeräte (2, 3, 4) zum Aufrechterhalten ihrer Stromversorgung für eine erste Dauer nach dem Abstellen des Antriebssystems ausgebildet sind,
jedes autonome Steuergerät (2) zum Ausführen einer Aufgabe nach dem Abstellen des Antriebssystems ausgebildet ist,
jedes autonome Steuergerät (2) ferner zum Aufrechterhalten der Verbindung mit dem Stromnetz nach dem Ablauf der ersten Dauer und zum Unterbrechen seiner eigenen Stromverbindung nach dem Ausführen seiner Aufgabe ausgebildet ist.

5. Steuersystem nach Anspruch 4, wobei ein autonomes Steuergerät (2) zum Melden seines Fehlens an ein Master-Steuergerät (3) ausgebildet ist.

6. System nach Anspruch 5, wobei ein autonomes Steuergerät (2) zum Unterbrechen seines Sendens von Daten an ein Master-Steuergerät (3) über das Datennetzwerk (1) zum Melden seines Fehlens an das Master-Steuergerät (3) ausgebildet ist.

7. System nach Anspruch 5, wobei ein autonomes Steuergerät (2) zum Senden eines vordefinierten Datenpakets an ein Master-Steuergerät (3) über das Datennetzwerk (1) zum Melden seines Fehlens an das Master-Steuergerät (3) ausgebildet ist.

8. System nach einem der Ansprüche 4 bis 7, wobei das Datennetzwerk (1) ein CAN-Netzwerk ist.

## Claims

1. Method for controlling the electrical power supply of an automotive vehicle comprising a powertrain and an electrical power supply battery, the vehicle being equipped with at least one stand-alone processor (2), at least one master processor (3), and at least one slave processor (4), the processors (2, 3, 4) being connected by a data network (1), the stand-alone processors (2) each being able to perform at least one task after the powertrain has been turned off and power supply to the aforementioned processors (2, 3, 4) has been maintained for a first length of time,
the control method being **characterized in that** it comprises the following steps in succession:
- the absence of the stand-alone processor (2) is declared to the master processor (3);
- each slave processor (4) has its power supply interrupted;
- the master processor (3) has its power supply interrupted;
- each stand-alone processor (2) is contolled so that its power supply is maintained beyond the first length of time; and
- each stand-alone processor (2) is controlled so that its power supply is interrupted when it has completed its task.

2. Method according to Claim 1, in which the absence of the stand-alone processor (2) is declared by interrupting the transmission of data by the stand-alone processor (2) to the master processor (3) over the data network (1).

3. Method according to Claim 1, in which the absence of the stand-alone processor is declared by transmitting a preset data packet from the stand-alone processor (2) to the master processor (3) over the data network (1).

4. System for controlling the electrical power supply of an automotive vehicle comprising a powertrain and an electrical power supply battery, and equipped with at least one stand-alone processor (2), at least one master processor (3), and at least one slave processor (4), the processors (2, 3, 4) being connected by a data network (1), the stand-alone processors (2) each being able to perform at least one task after the powertrain has been turned off, the vehicle moreover being equipped with an electrical power supply network connecting the processors to the electrical power supply battery, **characterized in that**,
each master processor (3) and each stand-alone processor (2) being able to manage their own connection to the electrical network,
the processors (2, 3, 4) are able to maintain their electrical power supply for a first length of time after the powertrain has been turned off,
each stand-alone processor (2) is able to perform a task after the powertrain has been turned off,
each stand-alone processor (2) furthermore being able to remain connected to the electrical network after the first length of time has expired, and to interrupt its own electrical connection after it has performed its task.

5. Control system according to Claim 4, in which a stand-alone processor (2) is able to signal its absence to a master processor (3).

6. System according to Claim 5, in which a stand-alone processor (2) is able to interrupt its transmission of data to a master processor (3) over the data network (1), in order to declare its absence to the master processor (3).

7. System according to Claim 5, in which a stand-alone processor (2) is able to transmit a preset data packet to a master processor (3) over the data network (1), in order to declare its absence to the master processor (3).

8. System according to any one of Claims 4 to 7, in which the data network (1) is a CAN network.
